Europäisches Patentamt

European Patent Office

Office européen des brevets

(11) Veröffentlichungsnummer: **0 470 369 A2**

# EUROPÄISCHE PATENTANMELDUNG

(21) Anmeldenummer: **91111087.2**

(51) Int. Cl.⁵: **H04N 9/31**

(22) Anmeldetag: **04.07.91**

(30) Priorität: **08.08.90 DE 4025136**

(43) Veröffentlichungstag der Anmeldung:
**12.02.92 Patentblatt 92/07**

(84) Benannte Vertragsstaaten:
**AT CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Köchel, Matthias, Grundig E.M.V.,**
**Max Grundig**
**holländ. Stiftung & Co.KG, Kurgartenstrasse**
**37**
**W-8510 Fuerth(DE)**

(54) **Projektionsgerät für die Grossbildprojektion.**

(57) Es wird ein Projektionsgerät für die Großbildprojektion beschrieben, welches nach dem Prinzip der Modulation des polarisierten Lichtes arbeitet. Bei Lichtventilen zur Bildmodulation des durchtretenden polarisierten Lichtes besteht der am Lichteingang notwendige Polarisator meist aus einer Polarisationsfolie, die systembedingt nur maximal 50 % des eintreffenden Lichtes ausnutzt. Als Ersatz für diese Polarisationsfolie wird ein Interferenz-Polarisator (50) eingesetzt, der eine nahezu verlustfreie Polarisation des einfallenden Lichtes ermöglicht. Durch die besondere Gestaltung des Interferenz-Polarisators (50) werden die notwendigen Volumina der Bausteine des Interferenz-Polarisators (50), sowie der lichteingangs benachbarten Elemente, wie Spiegel (3), Kondensor (4) und IR-Absorberfilter (5) minimiert. Durch besondere Ausgestaltung einer Ausführungsart mit IR-transmittierendem Spiegel am Lichteintritt wird ein Großteil des Wärmeinhaltes des Lichtes bereits am Interferenz-Polarisator ausgefiltert.

Fig. 1

Die Erfindung betrifft ein Projektionsgerät für die Großbildprojektion nach dem Oberbegriff des Anspruchs 1.

Es wird von einem Stand der Technik ausgegangen, wie er z. B. in der Offenlegungsschrift DE 38 29 598 dargelegt ist. Darin ist ein Projektionsgerät beschrieben, welches mittels bekannter Elemente, wie Lichtteiler-Platten, Lichtmodulatoren (Lichtventilen), Spiegel, Objektive usw. die Projektion bewegter oder stehender Bilder auf eine Projektionswand ermöglicht. Die Variation der Lichttransmission der erwähnten Lichtventile wird dadurch erreicht, daß das zu modulierende Licht von einem ersten Polarisator linear polarisiert wird, dann die Polarisationsebene des Lichtes aufgrund der doppelbrechenden Eigenschaften des Materials des Lichtventils, je nach angelegter Steuerspannung, um einen bestimmten Winkel gedreht wird und schließlich von einem zweiten Polarisator (Analysator) nur der Anteil des in seiner Polarisationsebene gedrehten, linear polarisierten Lichtes transmittiert wird, dessen Polarisationsrichtung parallel zur bevorzugten Polarisationsrichtung des zweiten Polarisators liegt. Die Darstellung eines Bildes wird dadurch erreicht, daß das Lichtventil aus einer Vielzahl von matrixartig angeordneten Bildelementen besteht. Nach diesem bekannten Prinzip arbeiten z.B. Twisted-Nematic (TN) Flüssigkristallzellen. Zur optimalen Ausnutzung des von einer Lichtquelle erzeugten Weißlichts wird in DE 38 29 598 vorgeschlagen, als ersten Polarisator an Stelle der sonst üblichen Verwendung von Polarisationsfolien, die ja systembedingt maximal nur 50 % des einfallenden Lichtes ausnutzen, einen Interferenz-Polarisator zwischen Weißlichtquelle bzw. Kondensor und den Farbteilerplatten einzusetzen, der eine praktisch verlustfreie Polarisation des Weißlichtes ermöglicht. Es wird weiter vorgeschlagen, dazu einen Interferenz-Polarisator zu verwenden, wie er von H. Schröder in den 50-iger Jahren vorgeschlagen wurde (siehe Optik 13, Heft 4, 1956, Seiten 158 bis 168).

Ein Interferenz-Polarisator der vorgeschlagenen Art hat jedoch folgende Nachteile:

- großes Volumen, dadurch schwer und teuer,
- ungleiche Wege der Strahlengänge,
- Strahlengänge relativ lang, damit Verluste bei divergierendem Strahl,
- ungünstige lineare Anordnung, was einem kompakten Aufbau hinderlich ist,

Aufgabe der Erfindung ist es, die Vorzüge eines Interferenz-Polarisators zur Realisierung eines Projektions-Gerätes für Großbildprojektion zu nutzen, die geschilderten Nachteile jedoch zu vermeiden.

Diese Aufgabe wird durch die im Anspruch 1 gekennzeichneten Merkmale gelöst. Die Unteransprüche zeigen weitere vorteilhafte Ausführungen auf.

Der erfindungsgemäße Interferenz-Polarisator besteht in seinem Grundaufbau aus zwei 90°-Prismen veschiedener Größen. Auf die Grundfläche des kleineren Prismas oder auf die erste Schenkelfläche des größeren Prismas, wird eine Interferenzschicht aufgebracht. Diese beiden Flächen werden anschließend miteinander verkittet. Die erste Schenkelfläche des kleineren Prismas bildet die Lichteintrittsöffnung, die Grundfläche des größeren Prismas die Lichtaustrittsöffnung. Auf die zweite Schenkelfläche des kleineren Prismas wird eine Viertelwellenlängen-Platte aufgebracht. Die Außenseite dieser Viertelwellenlängen-Platte wird, ebenso wie die zweite Schenkelfläche des größeren Prismas, verspiegelt.

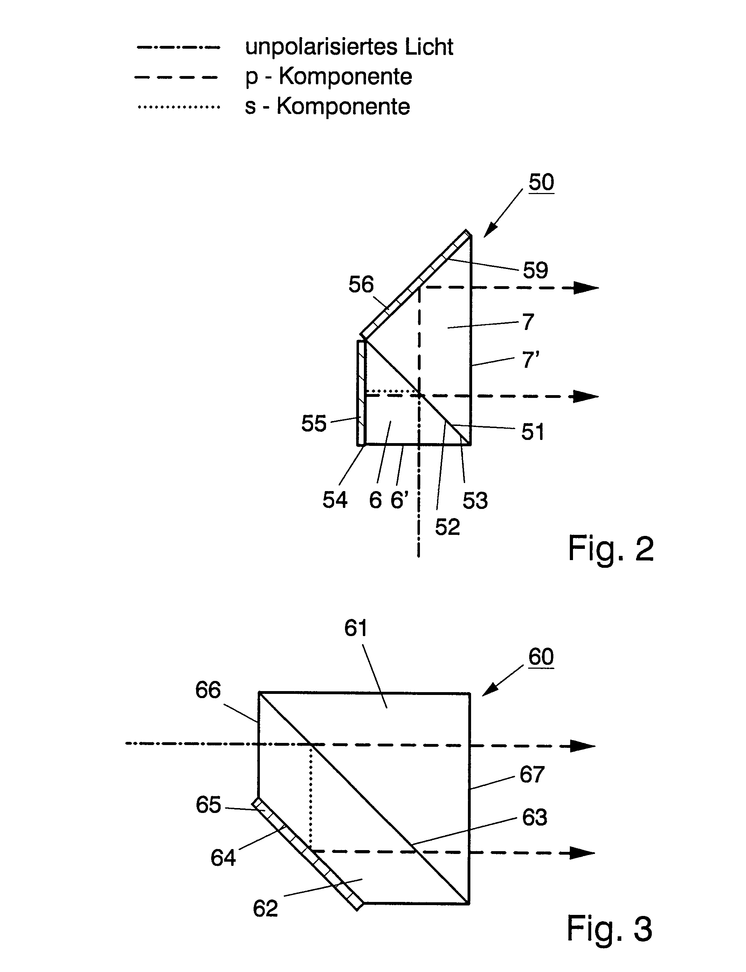

Der hier beschriebene Aufbau eines Interferenz-Polarisators besitzt gegenüber dem eingangs beschriebenen bekannten Interferenz-Polarisator ein wesentlich geringeres Volumen, wie ein Vergleich der Figuren 2 und 3 zeigt. Demgemäß sind auch die Längen der Strahlengänge reduziert, die Wege der Strahlengänge sind gleich lang. Die 90°-Anordnung von eintretendem zu austretendem Licht ermöglicht eine kompaktere Bauweise des Projektionsgerätes gegenüber einer linearen Anordnung.

Die Erfindung wird nachstehend anhand der Zeichnungen näher erläutert. Es zeigen im einzelnen als schematische Darstellungen:

Figur 1     den Aufbau eines Projektionsgerätes in Draufsicht,

Figur 2     einen erfindungsgemäßen Interferenz-Polarisator,

Figur 3     einen Interferenz-Polarisator nach dem Stand der Technik,

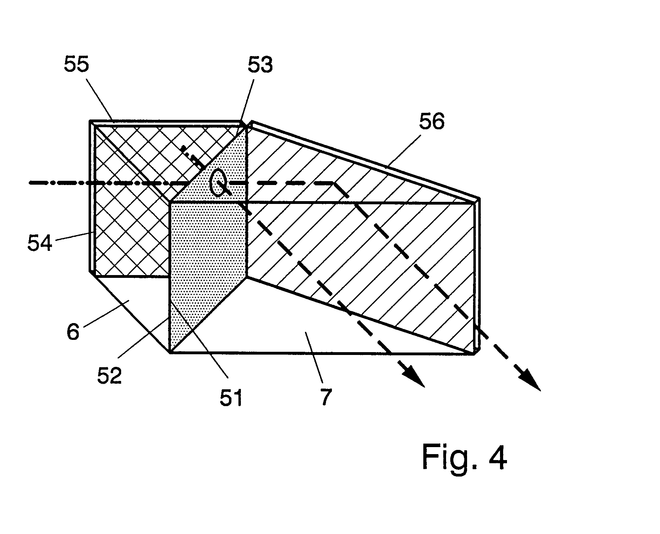

Figur 4     den Interferenz-Polarisator nach Figur 2 in perspektivischer Darstellung,

Figur 5     den Aufbau eines Projektionsgerätes unter Verwendung einer anderen Ausführungsart eines Interferenz-Polarisators,

Figur 6     die Draufsicht auf den in Figur 5 verwendeten Interferenz-Polarisator,

Figur 7     eine Ausführungsart des Interferenz-Polarisators nach Figur 6, jedoch mit um 90° gedrehter Lichteintrittsöffnung,

Figur 8     den Interferenz-Polarisator nach Figur 6, jedoch ohne 90°-Prisma am Lichteintritt, dafür mit IR-transmittierendem Spiegel.

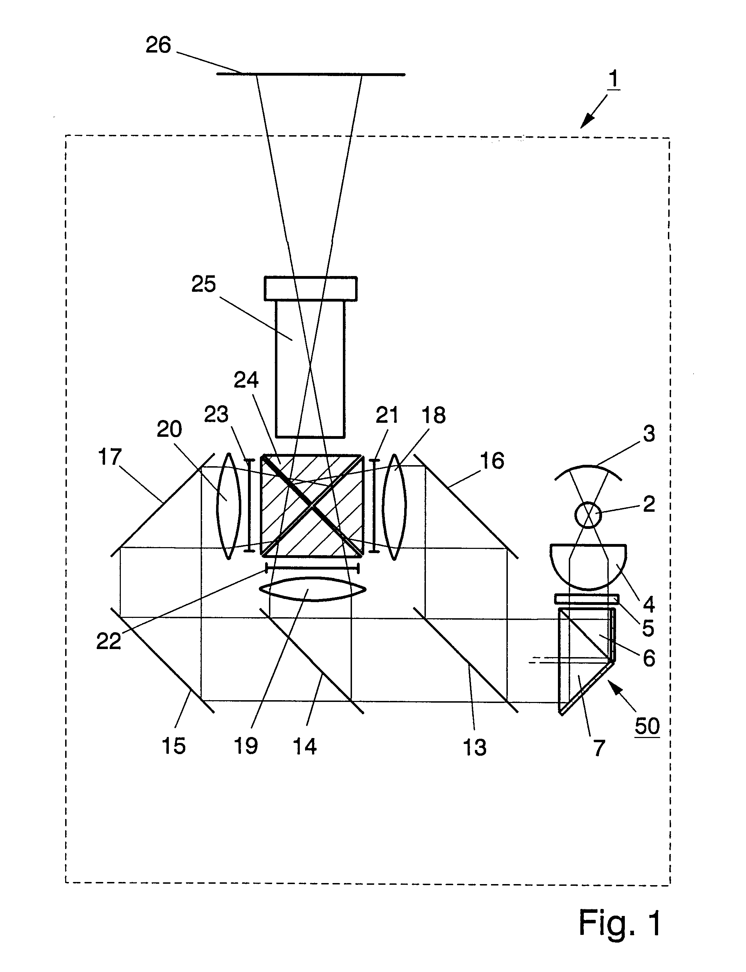

In Figur 1 ist der prinzipielle Aufbau eines Projektionsgerätes unter Verwendung des erfindungsgemäßen Interferenz-Polarisators dargestellt. Das Licht einer Lichtquelle 2 wird über einen Reflektor 3, einen Kondensor 4 und einen IR- und UV-Absorberfilter 5 dem Interferenz-Polarisator 50 zugeführt,in dem es entsprechend der Arbeitsweise des Interferenz-Polarisators polarisiert, reflektiert, zum Teil in seiner Polarisationsrichtung um 90° gedreht und linear polarisiert den nachfolgenden dichroitischen Farbteilern 13, 14, 15 zugeleitet wird. An diesen wird das polarisierte Licht in die Farbauszüge Rot, Blau und Grün zerlegt und über Spiegel 16, 17 und den Linsen 18, 19, 20 den Lichtventilen 21, 22, 23 zugeführt. Dort wird für jeden Farbauszug eine Intensitätsmodulation entsprechend den darzustellenden Bildern durchgeführt, indem durch die doppelbrechenden Eigenschaften des Materials des Lichtventils die Polarisationsebene des linear polarisierten Lichtes gedreht und vom folgenden Analysator nur der Anteil transmittiert wird, dessen Polarisationsrichtung parallel zur bevorzugten Polarisationsrichtung des Analysators liegt. Dadurch werden in der nachfolgenden optischen Einrichtung 24 die Lichtbündel mit Hilfe dichroitischer Spiegelschichten wieder zu einem gesamten Lichtbündel zusammengeführt und das entstandene Farbbild über die Projektions-Optik 25 auf eine Projektionsfläche 26 projiziert.

Die Figur 2 stellt die Draufsicht auf den erfindungsgemäßen Interferenz-Polarisator, wie er in Figur 1 eingesetzt ist, dar.

Das unpolarisierte Licht tritt in die Lichteintrittsöffnung 6' des kleineren 90°-Prismas 6 ein. Die Parallelkomponente (p-Komponente) durchdringt die zwischen den beiden Prismenflächen 51, 52 liegende Interferenzschicht 53 und wird an der Schenkelfläche 59 des größeren 90°-Prismas 7 um 90° umgelenkt, worauf es aus der von der Grundfläche des größeren 90°-Prismas 7 gebildeten Lichtaustrittsöffnung 7' den Interferenz-Polarisator verläßt.

Die senkrechte Komponente (s-Komponente) des eintretenden Lichtes wird an der Interferenzschicht 53 um 90° umgelenkt und der Viertelwellenlängen-Platte 54 zugeleitet, wobei ihre Polarisationsebene nach zweimaligem Durchgang durch die Viertelwellenlängen-Platte und Reflektion an der verspiegelten Außenfläche um 90° gedreht wird. Die nach dieser Drehung nun parallel zur Zeichenebene polarisierte Komponente wird von der Interferenzschicht transmittiert und ebenso der Lichtaustrittsöffnung 7' zugeführt.

Die Figur 3 zeigt in eindeutiger Weise die unterschiedliche Größe eines Interferenz-Polarisators 60 nach dem Stand der Technik im Vergleich zu dem erfindungsgemäßen Interferenz-Polarisator 50 nach Figur 2. Bei dem Interferenz-Polarisators 60 nach Figur 3, der aus einem Dove-Prisma 62, einem 90°-Prisma 61, dazwischenliegender Interferenzschicht 63 und einer Viertelwellenlängen-Platte 64, sowie einer Verspiegelung 65 auf der Deckfläche des Dove-Prismas 62 besteht, ist die Größe der Lichteintrittsöffnung 66 identisch mit der Größe der Lichteintrittsöffnung 6' des Interferenz-Polarisators 50 in Figur 2. Ebenfalls identisch sind die Größen der beiden Lichtaustrittsöffnungen 67, 7' der beiden Interferenz-Polarisatoren. Der erfindungsgemäße Interferenz-Polarisator 50 ist also, trotz gleicher Lichtein- und Lichtaustrittsöffnungen wie beim Interferenz-Polarisator 60 nach dem Stand der Technik, mit wesentlich kleinerem Volumen realisiert.

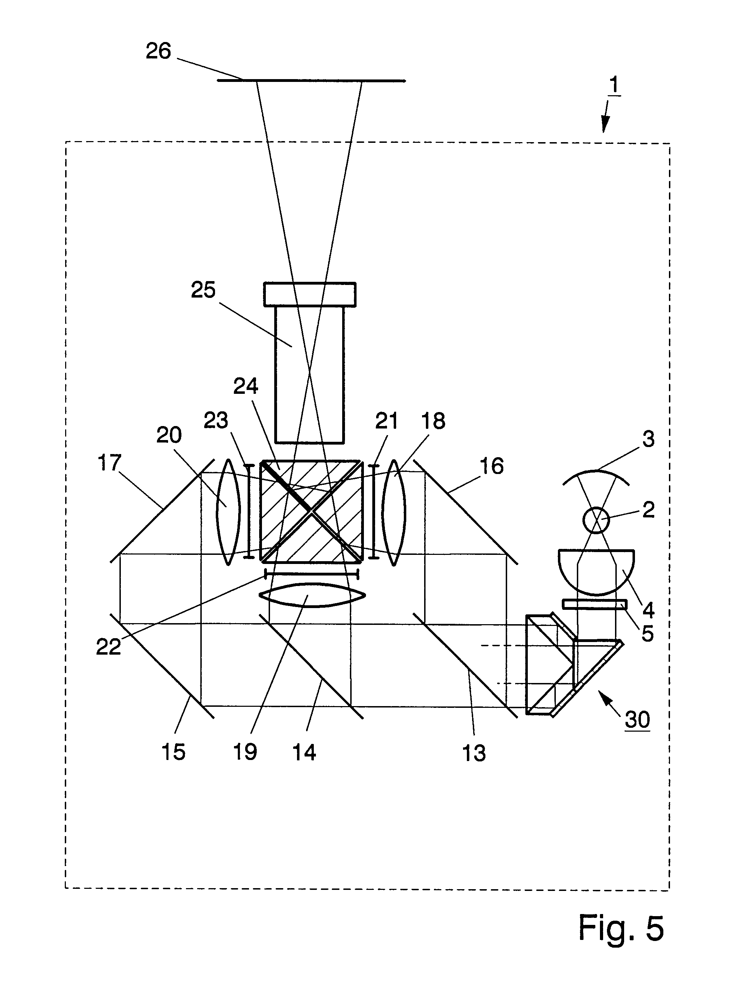

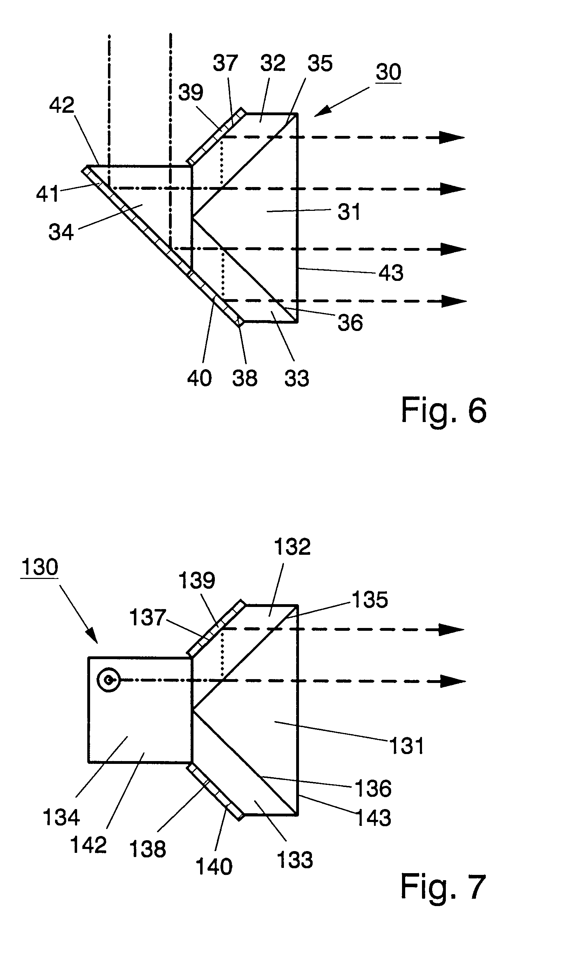

In Figur 5 ist eine Ausführung eines Projektionsgerätes dargestellt, die, in Lichteintrittsrichtung gesehen, nach dem Interferenz-Polarisator 30 der Ausführung nach Figur 1 entspricht. Der in dieser Ausführungsform eingesetzte Interferenz-Polarisator 30 ist in Figur 6 dargestellt und wird anhand dieser Darstellung näher erläutert.

Der Interferenz-Polarisator 30 besteht aus einem größeren 90°-Prisma 31, zwei Dove-Prismen 32, 33, sowie einem kleineren 90°-Prisma 34. Die Grundfläche des Prismas 34 ist verspiegelt. Zwischen den Grundflächen der beiden Dove-Prismen 32, 33 und den Schenkelflächen des 90°-Prismas 31 befinden sich die Interferenzschichten 35, 36. Die Deckflächen der beiden Dove-Prismen 32, 33 tragen je eine Viertelwellenlängen-Platte 37, 38, die an ihrer Außenfläche 39, 40 vorzugsweise verspiegelt sind.

Das in die erste Schenkelfläche des 90°-Prismas 34 eintretende Licht wird an der Spiegelfläche 41 um 90° umgelenkt und tritt in die beiden Dove-Prismen ein, in denen die p-Komponente die Interferenzschichten 35, 36 durchdringt, die s-Komponente reflektiert, an den Viertelwellenlängen-Platten 37, 38 nach zweimaligem Durchgang in seiner Polarisationsrichtung um 90° gedreht, reflektiert und als p-Komponente der Lichtaustrittsöffnung zugeführt wird.

Figur 7 stellt eine modifizierte Ausführungsart 130 der in Figur 6 gezeigten Ausführung dar. Dabei ist das kleinere 90°-Prisma 134 gegenüber der Ausführung 34 in Figur 6 um 90° gedreht. Diese Ausführungsart bringt gegebenenfalls räumliche Vorteile bei einem bestimmten Aufbau eines Projektionsgerätes.

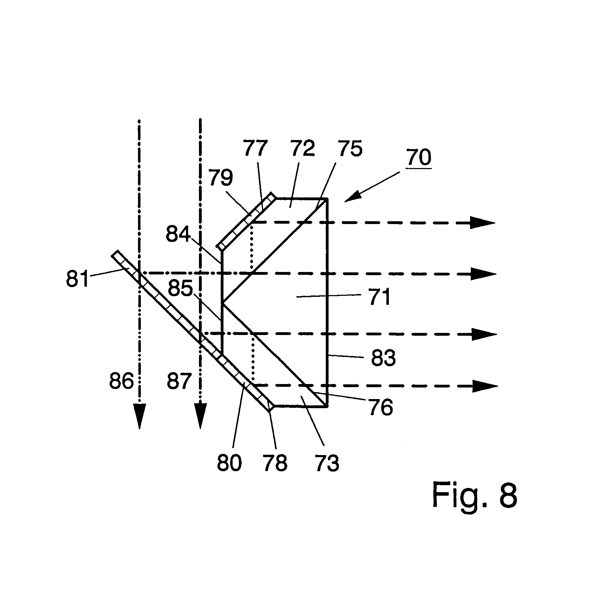

In Figur 8 ist eine modifizierte Ausführungsart eines Interferenz-Polarisators nach Figur 6 dargestellt. Das Lichteintrittsprisma 34 aus Figur 6 entfällt. Dafür befindet sich in der Verlängerung der Deckfläche des Dove-Prismas 73 ein IR-transmittierender Spiegel 81. Dieser IR-transmittierende Spiegel 81 erfüllt zwei Aufgaben. Zum einen wird der sichtbare Anteil des eintretenden Lichtes reflektiert und in die beiden Dove-Prismen 72, 73 zur weiteren Behandlung weitergeleitet, zum anderen wird der IR-Anteil des eintretenden Lichtes durch den Spiegel 81 transmittiert und verläßt bereits hier das optische System, von wo aus es in geeigneter Weise an die Außenluft des Projektionsgerätes abgegeben werden kann. Eine unnötige und unwillkommene Erwärmung des Interferenz-Polarisators und der nachfolgenden Projektionsgeräte-Elemente wird dadurch vermieden.

Die weitere Verarbeitung des aus dem Interferenz-Polarisator austretenden polarisierten Lichtes über Farbteilerplatten, Lichtventile und der optischen Einrichtung zum Übereinanderprojizieren des in den Lichtventilen behandelten Lichtes usw. ist in den Figuren 1 und 5 an nur einem Ausführungsbeispiel dargestellt. Es ist selbstverständlich eine Weiterverarbeitung nach anderen, zum Stand der Technik gehörenden Methoden, wie sie beispielsweise in Camcoder '90, JEI, part XIV oder in den EP-PS 0 287 034, 0 331 326 und 0 192 023 beschrieben sind, möglich.

**Patentansprüche**

1. Projektionsgerät für die Großbildprojektion, bestehend aus:
   - einer Lichtquelle (2),
   - Mitteln (13, 14, 15) zur Zerlegung des Lichtes in Primärfarben,
   - Elementen zum Polarisieren, Modulieren, Zusammenführen und Projizieren des bildmodulierten Lichtes auf eine Projektionsfläche (26),

   **gekennzeichnet durch** einen Interferenz-Polarisator (50) der aus zwei 90°-Prismen (6, 7) besteht, wobei die Größe der Grundfläche (52) des kleineren Prismas (6) der Größe der Schenkelfläche (51) des größeren Prismas (7) entspricht, und der eine Interferenzschicht (53) zwischen diesen beiden Flächen und eine Viertelwellenlängen-Platte (54) an einer der Schenkelflächen des kleineren Prismas (6) aufweist.

2. Projektionsgerät nach Anspruch 1 **gekennzeichnet durch** eine Verspiegelung (55, 56) der Außenseite der Viertelwellenlängen-Platte (54) und der Schenkelfläche (59) des Prismas (7)

3. Projektionsgerät nach Anspruch 1, **dadurch gekennzeichnet,** daß innerhalb des Interferenz-Polarisators die Länge des Strahlenganges des parallel polarisierten Lichtanteils gleich ist der Länge des Strahlenganges des reflektierten, senkrecht polarisierten und nach zweimaliger Transmission durch die Viertelwellenlängen-Platte (54) in seiner Polarisationsebene um 90° gedrehten Lichtanteils.

4. Projektionsgerät nach Anspruch 1, **dadurch gekennzeichnet,** daß die Lichteintrittsrichtung in den Interferenz-Polarisator rechtwinklig zur Lichtaustrittsrichtung aus diesem, jedoch in der allgemeinen Strahlenebene des Projektionsgerätes liegt.

5. Projektionsgerät nach Anspruch 1, **dadurch gekennzeichnet,** daß die Lichteintrittsrichtung in den Interferenz-Polarisator rechtwinklig zur Lichtaustrittsrichtung aus diesem, und außerhalb der allgemeinen Strahlenebene des Projektionsgerätes liegt.

6. Projektionsgerät nach dem Oberbegriff des Anspruchs 1, **gekennzeichnet durch** einen Interferenz-Polarisator (30) bestehend aus
   - einem ersten 90°-Prisma (31),
   - zwei Dove-Prismen (32, 33), deren Deckflächen mit je einer Viertelwellenlängen-Platte (37, 38) versehen sind und deren Grundflächen-Größen den Schenkelflächen-Größen des 90°-Prismas (31) entsprechen und zwischen den Grundflächen der Dove-Prismen (32, 33) und den Schenkelflächen des 90°-Prismas (31) sich je eine Interferenz-Schicht (35, 36) befindet,
   - einem zweiten 90°-Prisma (34), dessen Schenkelflächen-Größe der Summe der Größe zweier Schenkelflächen der Dove-Prismen (32, 33) entspricht.

7. Projektionsgerät nach Anspruch 6, **gekennzeichnet durch** eine Verspiegelung (39, 40, 41) der Außenseiten der Viertelwellenlängen-Platten (37, 38) und der Grundfläche des 90°-Prismas (34).

8. Projektionsgerät nach Anspruch 6, **dadurch gekennzeichnet,** daß das 90°-Prisma (34, 134) entfällt und statt dessen ein IR-transmittierender Spiegel (81) vorhanden ist, der das eintretende Licht in die Dove-Prismen (32, 33, 132, 133) reflektiert und die IR-Anteile transmittiert.

9. Projektionsgerät nach den Ansprüchen 1, 6 oder 8, **dadurch gekennzeichnet,** daß die Lichteintrittsflächen (6 , 42, 142, 84, 85) und die Lichtaustrittsflächen (7 , 43, 143, 83) vergütet sind.

10. Projektionsgerät nach den Ansprüchen 1, 6 oder 8, **dadurch gekennzeichnet,** daß der Interferenz-Polarisator (50, 30, 130, 70) zwischen der Beleuchtungseinheit, bestehend aus Lampe (2), Hohlspiegel (3), Kondensor (4) und IR-Absorbtionsfilter (5), oder einer aus ähnlichen Elementen bestehenden Beleuchtungseinheit und den Farbteiler-Platten (13, 14, 15) angeordnet ist.

11. Projektionsgerät nach den Ansprüchen 1, 6 oder 8, **dadurch gekennzeichnet,** daß die optischen Komponenten der Beleuchtungseinheit, wie z.B. Hohlspiegel (3), Kondensor (4) und Absorbtionsfilter (5) kleiner dimensioniert sind, als bei Anwendung ohne den Interferenz-Polarisator.

12. Projektionsgerät nach den Ansprüchen 1, 6 oder 8, **dadurch gekennzeichnet,** daß die Symmetrieachse der Beleuchtungseinheit, letztere bestehend aus z.B. Hohlspiegel (3), Kondensor (4) und Absorbtionsfilter (5), nicht senkrecht zur Lichteintrittsfläche (6 , 42, 142) des Interferenz-Polarisators (30, 50, 130) liegt.

13. Projektionsgerät nach Anspruch 12, **dadurch gekennzeichnet,** daß die Symmetrieachse der Beleuchtungseinheit nicht in den Mittelpunkt der Lichteintrittsfläche (6 , 42, 142) trifft.

14. Projektionsgerät nach den Ansprüchen 1, 6 oder 8, **dadurch gekennzeichnet,** daß die Lichtquelle aus mehreren Lichtquellen besteht, deren spektrale Emissions-Charakteristika im wesentlichen den Primärfarben entsprechen, und daß im Projektionsgerät keine Farbteilerplatten zur spektralen Trennung des Lichtes verwendet werden.

Fig. 1

—·—·—  unpolarisiertes Licht

— — —  p - Komponente

·············  s - Komponente

Fig. 2

Fig. 3

Fig. 4

Fig. 5

Fig. 6

Fig. 7

10

Fig. 8